# EUROPEAN PATENT APPLICATION

(11) **EP 3 489 436 A1**
(43) Date of publication of application: **29.05.2019**
(21) Application number: 18208170.3
(22) Date of filing: 23.11.2018
(51) Int. Cl.: E04G 23/02, F21V 21/04, H02G 3/12

(54) **A DEVICE TO BE FIXED IN AN OPENING AND A METHOD FOR FILLING AN OPENING**

(30) Priority: 23.11.2017 GB 201719478
(71) Applicant: NEJH Limited, Donahgadee Down BT21 0PQ (GB)
(72) Inventor: HARPER, Edward Johnston, Donaghadee County Down BT21 OPQ (GB)
(74) Representative: Hanna, John Philip

(57) **Abstract**

A device fixable in a surface, the surface having an opening defining a boundary, the device being fixable in the opening. The device has an adjustable boundary-engaging member and can be operated to extend in at least one direction to engage the boundary of the opening thereby fixing the device in the opening. The device can be used to repair surfaces such as ceilings or walls, for example.

## Description

The present invention relates to a device to be fixed in an opening. In particular, a device to be fixed in an opening of a surface, such as plasterboard, and to provide a substrate for the application of coatings such as plaster or paint.

It is often desirable to remove or alter the location of fittings, such as downlights, in a ceiling. When an existing fitting is removed an opening is left in the ceiling. This opening must be filled and/or covered and then typically a layer of plaster or other coating is applied to create a smooth, homogenous finish on the ceiling. Typically, where the ceiling is a plasterboard ceiling, the opening is filled by first fixing a piece of wood or other suitable material traversing the opening on the upper side of the ceiling. Usually, the wood is fixed across the opening by inserting screws upwards through the ceiling near the periphery of the opening and into the wood. Next a piece of plasterboard is cut, from a sheet of plasterboard, to be fitted within the opening. The piece of plasterboard is fitted by holding it in the opening and inserting one or more screws extending up through the plasterboard and into the wood support. Finally, a coating layer of plaster is applied to cover the filled opening and, in particular, the gaps between the piece of plasterboard and the surrounding ceiling. This is wasteful, as the leftover material from the plasterboard sheet is often discarded. It is additionally time consuming because the opening must be measured and a replacement piece cut to size. Specialist cutting tools such as a jigsaw are usually required to accurately cut the replacement piece, and it can be cumbersome to fix the piece in the opening before applying a coating layer. Tools including at least a saw and screwdriver are required as well as multiple materials.

Other solutions involve covering an opening by cutting a piece of a substrate, such as a wire mesh, and gluing it in or over the opening. Then, after the glue has set, applying a layer of plaster or other coating over the wire mesh. The wire mesh often has to be cut to size, and some of the mesh is inevitably wasted. In addition, the glue takes time to set, meaning the plaster or coating cannot be applied immediately.

There therefore exists the possibility to make the process of filling or covering an opening in a surface less wasteful and less time consuming, and to reduce the skill, labour, parts and tools required in filling or covering an opening in a surface.

It is an object of the present invention to mitigate or obviate the problems associated with filling and/or covering an opening in a surface.

According to a first aspect of the invention there is provided a device fixable in a surface, the surface having an opening defining a boundary, the device comprising an adjustable boundary-engaging member, the device being operable to extend in at least one direction for engaging the boundary of the opening and for fixing the device in the opening.

Advantageously, the device is adaptable to fit a range of openings of various shapes and/or sizes. Further, the device can be modified in terms of shape and/or size to provide a range of devices to be fixed in a corresponding range of openings of various shapes and/or sizes. Advantageously again, after the device is installed in an opening a layer of plaster or other coating can be applied immediately.

Ideally, the device being formed or shaped to be fixed in a substantially circular opening. Advantageously, this makes it suitable for filling openings left by the removal of downlights or other circular components in a surface such as a ceiling or wall.

Ideally, the adjustable boundary-engaging member being operable to extend in at least one direction for engaging the boundary of an opening and for fixing the device in an opening.

Preferably, the device having a withdrawn configuration or an extended configuration. More preferably, the adjustable boundary-engaging member having a withdrawn configuration or an extended configuration.

Ideally, the device capable of being adjusted from the withdrawn configuration to the extended configuration.

Preferably, the adjustable boundary-engaging member capable of being adjusted from the withdrawn configuration to the extended configuration.

Ideally, the device capable of being adjusted from the extended configuration to the withdrawn configuration. Advantageously, this enables the device to be removed after fitting.

Preferably, the adjustable boundary-engaging member capable of being adjusted from the extended configuration to the withdrawn configuration.

Ideally, the device comprising a centre and the adjustable boundary-engaging member being extendible away from the centre in at least one direction.

Preferably, where the device is substantially circular, the adjustable boundary-engaging member is radially extendible, extendible at an angle to a radial line, and/or tangentially extendible.

Preferably, the device comprising a support member. Advantageously, the support member supports one or more other component parts of the device and/or provides a structure to the device.

Preferably, the support member being in abutment with at least part of the adjustable boundary-engaging member.

Ideally, the support member being coupled to the adjustable boundary-engaging member.

Ideally, the support member being axially coupled to the adjustable boundary-engaging member.

Preferably, the support member being substantially concentric with the adjustable boundary-engaging member.

Ideally, the device comprising a means for changing the configuration of the device from the withdrawn configuration to the extended configuration.

Preferably, the device comprising a means for changing the configuration of the adjustable boundary-engaging member from the withdrawn configuration to the extended configuration.

Preferably, the device comprising an inner region and an outer region.

Ideally, the inner region being located centrally on the device.

Preferably, in the withdrawn configuration, a surplus of the adjustable boundary-engaging member being located in the inner region.

Ideally, in the withdrawn configuration, the majority of the adjustable boundary-engaging member being in the inner region.

Preferably, when moving from the withdrawn configuration to the extended configuration, part of the adjustable boundary-engaging member moves from the inner region to the outer region.

Ideally, the adjustable boundary-engaging member comprising an apex and sloping sides that slope away from the apex.

Preferably, the adjustable boundary-engaging member being pyramidal, tetrahedral, cone-shaped, or domed.

Preferably, the sloping sides comprising a plurality of sloping-side members.

Ideally, each sloping-side member extending from the apex of the adjustable boundary-engaging member.

Ideally, the sloping sides comprising a non-linear slope, most preferably a curved slope.

Preferably, the support member comprising a substantially planar surface.

Ideally, the apex being substantially planar.

Preferably, the apex being parallel with at least a part of the support member.

Ideally, the apex being parallel with the substantially planar surface.

Ideally, the means for changing the configuration of the adjustable boundary-engaging member comprises means for moving the apex of the adjustable boundary-engaging member towards or away from the support member.

More preferably, the means for changing the configuration of the adjustable boundary-engaging member comprises means for moving the apex of the adjustable boundary-engaging member towards or away from the substantially planar surface of the support member.

Preferably, when the means for moving the apex of the adjustable boundary-engaging member towards the support member is operated, the apex of the adjustable boundary-engaging member is moved towards or away from the support member.

Preferably, when the apex of the adjustable boundary-engaging member is moved substantially towards the support member, part of the adjustable boundary-engaging member presses against the support member and is forced outwards.

By outwards we mean away from the apex and/or centre of the support member.

Ideally, when the apex of the adjustable boundary-engaging member is moved substantially towards the support member the sloping sides of the adjustable boundary-engaging member press against the support member and are forced outwards.

Ideally, the adjustable boundary-engaging member comprising resilient and/or flexible material.

Preferably, the adjustable boundary-engaging member comprising steel.

Ideally, the adjustable boundary-engaging member comprising spring steel and/or stainless steel.

Preferably, the means for moving the apex of the adjustable boundary-engaging member towards or away from the support member comprises an actuator means.

Ideally, the actuator means extending between the adjustable boundary-engaging member and the support member.

Preferably, the means for moving the apex of the adjustable boundary-engaging member towards or away from the support member being operable to move the adjustable boundary-engaging member and/or the support member relative to, and guided by, the actuator means.

Ideally, the actuator means extends through the adjustable boundary-engaging member and/or the support member.

Ideally, the actuator means being positioned substantially central to the adjustable boundary-engaging member and the support member.

Preferably, when the means for moving the apex of the adjustable boundary-engaging member towards or away from the support member is operated, the apex of the adjustable boundary-engaging member is moved towards the support member.

Ideally, the actuator means extends through the apex of the adjustable boundary-engaging member.

Preferably, the actuator means comprises a flat, capped and/or rounded point. Advantageously, there are no exposed sharp points after fixing the device in an opening.

Preferably, the device comprises a cap.

Ideally, at least part of the cap is located on, near to and/or abutting the actuator means.

Advantageously, the cap prevents the adjustable-boundary engaging member from being decoupled from the actuator means.

In one embodiment, the cap is formed as part of the support member.

Alternatively, the cap being formed as a separate component which is fitted to the actuator means and/or the support member.

Ideally, the cap substantially enclosing at least a part of the actuator means.

Preferably, the cap being conical or dome shaped.

In one embodiment, the apex of the adjustable boundary-engaging member can be moved towards the support member but not easily away from the support member.

In one embodiment, the means for moving the apex of the adjustable boundary-engaging member towards or away from the support member comprises a ratchet mechanism such that the apex of the adjustable boundary-engaging member can be moved towards the support member but not easily away from the support member.

In another embodiment, the apex of the adjustable boundary-engaging member can be moved towards or away from the support member. Advantageously, the device can then be releasably fixed in an opening.

Preferably, the means for changing the configuration of the adjustable boundary-engaging member being operable from or about the support member.

Ideally, the means for moving the apex of the adjustable boundary-engaging member towards the support member being operable from or about the support member. Advantageously, the device can be positioned in an opening and then the adjustable boundary-engaging member extended by operating the means for moving the apex of the adjustable boundary-engaging member towards the support member from or about the support member.

Preferably, the means for moving the apex of the adjustable boundary-engaging member towards the support member being operable from the substantially planar surface of the support member.

Ideally, the actuator means comprising a screw member.

In one embodiment, the actuator means comprises a threaded screw member.

Ideally, the actuator means comprises an auger.

Preferably, the actuator means comprises a plastic auger.

Ideally, the support member comprises an opening for receiving the means for changing the configuration of the adjustable boundary-engaging member.

Preferably, the device comprises a retaining means for retaining the means for changing the configuration of the adjustable boundary-engaging member relative to the support member.

Ideally, the support member and/or the means for changing the configuration of the adjustable boundary-engaging member comprises a retaining means for retaining the means for changing the configuration of the adjustable boundary-engaging member within the opening of the support member.

Preferably, the support member and/or the actuator means comprises a retaining means for retaining the actuator means within the opening of the support member.

Ideally, the means for changing the configuration of the adjustable boundary-engaging member comprises a head portion.

More preferably, the actuator means comprises a head portion.

Ideally, in use, the head portion having an outer surface being in alignment with the substantially planar surface of the support member.

Preferably, the support member comprising a seat to accommodate the head portion.

Ideally, the retaining means comprising a retaining projection extending from the means for changing the configuration of the adjustable boundary-engaging member.

Preferably, the retaining means comprising a retaining projection extending from the head portion.

Ideally, the retaining projection comprising a clip.

Preferably, the retaining projection being resilient.

Ideally, the clip operable to slide over a portion of the support member to retain the means for changing the configuration of the adjustable boundary-engaging member therein.

Preferably, the retaining means comprises the support member being formed to engage with the retaining projection, more preferably, being formed to engage with the clip.

Ideally, the means for changing the configuration of the adjustable boundary-engaging member comprising a plurality of retaining projections.

Alternatively, the clip being positioned on the support member and the means for moving the apex of the adjustable boundary-engaging member being formed to engage the clip.

Preferably, the support member and the means for moving the apex of the adjustable boundary-engaging member being formed as two separate pieces and coupled by positioning the means for moving the apex of the adjustable boundary-engaging member to engage with the support member.

Ideally, the support member comprising a recessed circular seat and the head portion of the actuator means comprising a disk rotatably mounted in the recessed circular seat.

Ideally, the retaining means retains at least part of the means for moving the apex of the adjustable boundary-engaging member flush with a part of the support member.

Advantageously, the support member and the means for moving the apex of the adjustable boundary-engaging member can be easily formed and fitted together by inserting the means for moving the apex of the adjustable boundary-engaging member into the opening of the support member and engaging the retaining means. The retaining means prevents the means for moving the apex of the adjustable boundary-engaging member from being easily decoupled from the support member.

Advantageously again, no further modifications to the shape or form of the device are needed after the means for moving the apex of the adjustable boundary-engaging member is retained in the support member.

Ideally, the means for moving the apex of the adjustable boundary-engaging member towards the support member comprising the actuator means being rotatable from the support member.

Preferably, the device comprising an activator to activate the actuator means.

Preferably, the activator being a key.

Ideally, the activator operable to rotate the screw member.

Ideally, the activator being detachably coupled to the adjustable boundary-engaging member, support member and/or the means for changing the configuration of the adjustable boundary-engaging member.

Preferably, the activator being formed with the support member.

Advantageously, the installer does not need to use any additional tools to fix the device in an opening.

Ideally, the means for changing the configuration of the adjustable boundary-engaging member being shaped or formed to receive the activator.

Ideally, the means for changing the configuration of the adjustable boundary-engaging member comprising a groove to receive the key.

Preferably, the key being formed to fit the groove.

Ideally, the activator being further operable as a tool for applying a substance, such as plaster, to the device.

Preferably, the activator being flexible and resilient such that it is functionable as a tool for applying a substance.

Advantageously, the activator has dual-functions and further reduces the requirement for additional tools required for fixing an opening in a surface using the device.

Preferably, the device comprising a stop means to limit the movement of the adjustable boundary-engaging member towards the support member. Advantageously, this prevents the adjustable boundary-engaging member from extending beyond that which is required to fix the device in an opening, thereby preventing unnecessary damage to the boundary of the opening and/or surface.

Ideally, the stop means comprises a portion of the support member and/or the means for changing the configuration of the adjustable boundary-engaging member being shaped to abut the adjustable boundary-engaging member when the apex of the adjustable boundary-engaging member is moved a set distance towards the support member.

Additionally or alternatively, the stop means comprises the actuator means being partially threaded such that as the apex of the adjustable boundary-engaging member is moved past the threaded portion of the actuator means it is no longer moved by the rotation of the actuator means.

Alternatively, the stop means comprising a brake positioned at or about the support member to mitigate or prevent extension of the adjustable boundary-engaging member after a predetermined amount of extension.

Preferably, the device comprises a guide means for guiding the adjustable boundary-engaging member.

Ideally, the guide means operable to guide the sloping sides of the adjustable boundary-engaging member, most preferably, the guide means being operable to guide the sloping-side members.

Ideally, the guide means comprises at least one channel shaped to accommodate the adjustable boundary-engaging member.

Preferably, the guide means comprises a channel for each of the sloping-side members of the adjustable boundary-engaging member.

Ideally, the guide means being located on the support member.

Preferably, the guide means being located at the periphery of the support member.

Ideally, the device comprising a side wall.

Preferably, the side wall being located on the support member.

Ideally, the side wall projecting upwardly from a peripheral portion of the support member.

Ideally, the side wall projecting orthogonally to the substantially planar surface of the support member.

Ideally, at least part of the side wall being formed with at least one channel.

Preferably, the side wall extending over the at least one channel.

Preferably, the support member comprising a base member.

Ideally, the side wall projecting orthogonally from the base member.

Ideally, the at least one channel being formed at or about the corner between the side wall and the base member.

Preferably, the corner of the base member and side wall comprising a plurality of channels for receiving the adjustable boundary-engaging member. Most preferably, the channels receiving the sloping sides of the adjustable boundary-engaging member.

Ideally, the channels are spaced angularly around the support member.

Preferably, the channels are equi-spaced around the support member.

Ideally, the side wall forming a part of the guide means.

Advantageously, the side wall prevents the sloping sides of the adjustable boundary-engaging member being deflected substantially upwards and away from the support member.

Preferably, the side wall preventing the sloping sides of the adjustable boundary-engaging member from being deflected substantially upwards and away from the support member when the means for changing the configuration of the adjustable boundary-engaging member is operated.

Ideally, the device is fixed in an opening by operating the means for changing the configuration of the adjustable boundary-engaging member, the sloping sides being pressed down against the support member and forced outwards and being guided by the guide means to engage with the boundary of the opening.

Preferably, the device, most preferably the adjustable boundary-engaging member, comprises a means for engaging the boundary.

Preferably, the means for engaging the boundary comprising at least one, most preferably all, of the plurality of sloping-side members terminating with a pointed and/or tapered edge. Advantageously, this engages the boundary of the opening in the surface and can fix the device in the opening.

Ideally, the sloping-side members being reinforced, most preferably, being reinforced at or about the pointed and/or tapered edge.

Preferably, the reinforcement comprises an indentation or fold to the sloping-side member, most preferably, at or about the pointed and/or tapered edge.

Ideally, the reinforcement comprises the sloping-side members terminating in a point that is heavier, thicker, more dense and/or more rigid than other areas of the adjustable boundary-engaging member.

Alternatively, the sloping-side members terminating in an adhesive surface.

Alternatively again, the device is fixed in an opening by fixing the adjustable boundary-engaging member to a surface when the adjustable boundary-engaging member is in the extended configuration.

Ideally, the adjustable boundary-engaging member is fixed to the surface by gluing, fastening or other adhering means. Advantageously, this alternative embodiment can be implemented when the adjustable boundary-engaging member does not easily engage with the boundary of a surface, for example, when the surface is constructed from a particularly irregular and/or impenetrable material.

Preferably, the device comprising a means to limit the depth of insertion of the device into an opening. Advantageously, an installer does not have to gauge the depth of insertion when fixing the device in an opening.

Ideally, the depth-limiting means comprising an abutment projection.

Preferably, the depth-limiting means comprising an abutment projection projecting outwards from the support member, most preferably, from the substantially planar surface of the support member.

Ideally, the abutment projection comprising a detachable tab.

Preferably, the depth-limiting means comprising a plurality of abutment projections, most preferably, three abutment projections.

Ideally, the abutment projections being spaced angularly about the support member.

Preferably, the abutment projections being equi-spaced about the support member.

Ideally, when the device is inserted into an opening and its depth limited by the depth-limiting means it sits flush or almost flush with the surface.

Ideally, the depth-limiting means being formed with the support member. Advantageously, these can be formed as a single piece. Advantageously again, the installer needs no further tools or measurements to determine the positioning of the device in an opening. The depth-limiting means can simply be removed from the device after the device is fixed in an opening.

Preferably, when the device is fixed in an opening it sits flush or almost flush with the surface.

Ideally, when the device is fixed in an opening the support member sits flush or almost flush with the surface.

Ideally, when the device is inserted into an opening and its depth limited by the depth-limiting means, the support member sits flush or almost flush with the surface.

Ideally, the support member comprises a keyed surface to act as a substrate for plaster or other coating.

Ideally, the support member comprises a rigid material.

Preferably, the device being at least partially formed from molded plastic and/or metal.

Ideally, the support member, the means for changing the configuration of the adjustable boundary-engaging member, the depth-limiting means and/or the key being constructed from molded plastic or metal.

Ideally, the device being compatible with insulating, fireproof and/or intumescent material.

Preferably, the device comprising insulating, fireproof and/or intumescent material.

Advantageously, insulation reduces heat loss through the device. Fireproof and/or intumescent material prevents or reduces the spread of fire through the device.

Ideally, the insulating, fireproof and/or intumescent material being formed with, or bonded to, the support member.

Preferably, the insulating, fireproof and/or intumescent material being formed with, or bonded to, the adjustable boundary-engaging member.

Ideally, the adjustable boundary-engaging member comprising an intumescent coating. More preferably, at least part of the sloping sides comprising an intumescent coating.

Preferably, the insulating, fireproof and/or intumescent material being formed with, or bonded to, the cap.

Ideally, the cap comprising an intumescent coating.

Preferably, the device comprising a strip of intumescent material bonded to the support member, most preferably to the side wall of the support member.

Ideally, the device comprising intumescent material being bonded to the substantially planar surface of the support member.

Preferably, the device comprising intumescent material coupled to a metal and/or gauzed substrate.

Ideally, the device comprising intumescent material coupled to the adjustable boundary-engaging member.

Preferably, the device comprising intumescent material coupled to the adjustable boundary-engaging member when the device is in the extended configuration. More preferably, the intumescent material being coupled to a portion of the adjustable boundary-engaging member that is extended beyond the side walls of the support member.

Ideally, the intumescent material being coupled to one or more sloping-side members.

Preferably, the intumescent material being provided on a hook, clip or adhesive substance and mounted on the adjustable boundary-engaging member.

Preferably, the intumescent material being provided on a plurality of hooks, clips and/or adhesive substances or surfaces and mounted on the adjustable boundary-engaging member.

Ideally, the intumescent material being provided on a hook, clip or adhesive substance and mounted on a portion of the adjustable boundary-engaging member that is extended beyond the side walls of the support member when in the extended configuration.

Advantageously, when fixed in an opening, the intumescent material can expand and fill space in the opening in the event of a fire.

In one embodiment, the device is adapted to receive a cover at or about the support member and covering at least part of the support member.

Advantageously, this provides an aesthetically appealing appearance without the need to apply coating substances such as plaster and conceals the adjustable boundary-engaging member.

Ideally, the device, most preferably the support member, comprising means for receiving and retaining a cover.

Preferably, the cover-receiving means comprising mechanical retaining means.

Advantageously, the cover can be mechanically received by the support member.

Ideally, the mechanical retaining means comprising a clip, biasing means, recess, retention fingers or other suitable form for mechanically retaining a cover.

Additionally or alternatively, the cover-receiving means comprising a magnet and/or magnetic material.

Advantageously, the cover can comprise magnet and/or magnetic material and can be magnetically attached onto the device to cover at least part of the support member.

Ideally, the cover having a finish corresponding to the finish of the surface to which the device is to be fitted.

In one embodiment, the cover comprising steel.

Ideally, the cover comprising a means for engaging with the support means or other component part of the device.

Preferably, the engaging means comprises a magnet or magnetic materials, a clip, biasing means, recess, retention fingers or other suitable means to engage with the support means or other component part of the device.

Preferably, the cover is thin and/or planar. Advantageously, it is unobtrusive and could be painted over.

According to a second aspect of the invention there is provided a kit of parts comprising a support member and an adjustable boundary-engaging member.

Ideally, the kit of parts comprising a means for changing the configuration of the adjustable boundary-engaging member between a withdrawn configuration and an extended configuration.

Preferably, the kit of parts comprising a substance to be applied to the device after the device has been fixed in an opening.

Ideally, the substance to be applied to the device comprising a protective and/or decorative building material.

Preferably, the substance to be applied to the device comprising plaster or render.

Preferably, the kit of parts comprising a tool for applying the substance to be applied to the device.

Ideally, the tool being a spatula.

In one embodiment, the tool being shaped such that it is functionable as an activator to activate the actuator means of the device.

Advantageously in this embodiment, it is not necessary to provide an activator detachably coupled to the support member thereby reducing the overall amount of materials used in the device.

Ideally, the kit of parts comprising insulating, fireproof and/or intumescent material.

Preferably, the insulating, fireproof and/or intumescent material being fixable to the device.

Preferably, the insulating, fireproof and/or intumescent material fixable to the support member and/or the adjustable boundary-engaging member.

Preferably, the kit of parts comprising hooks, clips or adhesive substances being fixable or mountable to the device. More preferably, the hooks, clips or adhesive substances being fixable or mountable to the support member and/or the adjustable boundary-engaging member.

Ideally, the hooks, clips or adhesive substances comprising insulating, fireproof and/or intumescent material.

Ideally, the kit of parts comprising a spare activator and/or additional or spare depth-limiting means.

Preferably, the kit of parts comprising a cap to be fitted to the actuator means of the device.

Advantageously, the kit of parts can be used to fill, optionally fireproof or insulate, and cover an opening in a surface such as a ceiling without the requirement of extraneous tools or materials.

Ideally, the kit comprising a cover.

According to a third aspect of the invention there is provided a method for filling an opening, the method comprising the step of fitting a device as according to the first aspect of the invention in an opening.

Preferably, the method comprising holding the device in the opening.

Ideally, the method comprising detaching the activator.

Ideally, the method comprising inserting the device into an opening until the depth-limiting means abuts a surrounding surface of the opening.

Preferably, the method comprising operating the means for changing the configuration of the adjustable boundary-engaging member.

Preferably, the method comprising operating the means for changing the configuration of the adjustable boundary-engaging member using the activator.

Preferably, the method comprising operating the means for changing the configuration of the adjustable boundary-engaging member until the adjustable boundary-engaging member substantially engages the boundary.

Ideally, the method comprising removing the depth-limiting means.

Ideally, the method comprising applying plaster or other coating on the device and over the opening.

In one embodiment, the method comprising fitting a cover.

Ideally, the method comprising painting over the cover.

It will be appreciated that optional features applicable to one aspect of the invention can be used in any combination, and in any number. Moreover, they can also be used with any of the other aspects of the invention in any combination and in any number. This includes, but is not limited to, the dependent claims from any claim being used as dependent claims for any other claim in the claims of this application.

The invention will now be described with reference to the accompanying drawings which shows by way of example only one embodiment of an apparatus in accordance with the invention.
Figure 1 is a plan view of a device to be fitted in an opening in accordance with the invention, the device being in the withdrawn configuration. Line C-C denotes a cross-sectional line illustrated in detail in Figure 2.
Figure 2 is a cross-sectional, side elevation view of line C-C as shown in Figure 1.
Figure 3 is perspective view of the device in Figure 1.
Figure 4 is side elevation view of the device in Figure 1.
Figure 5 is a plan view of the device of Figure 1 in the extended configuration. Line D-D denotes a cross-sectional line illustrated in detail in Figure 6.
Figure 6 is a cross-sectional, side elevation view of line D-D as shown in Figure 5.
Figure 7 is a perspective view of the device shown in Figure 5.

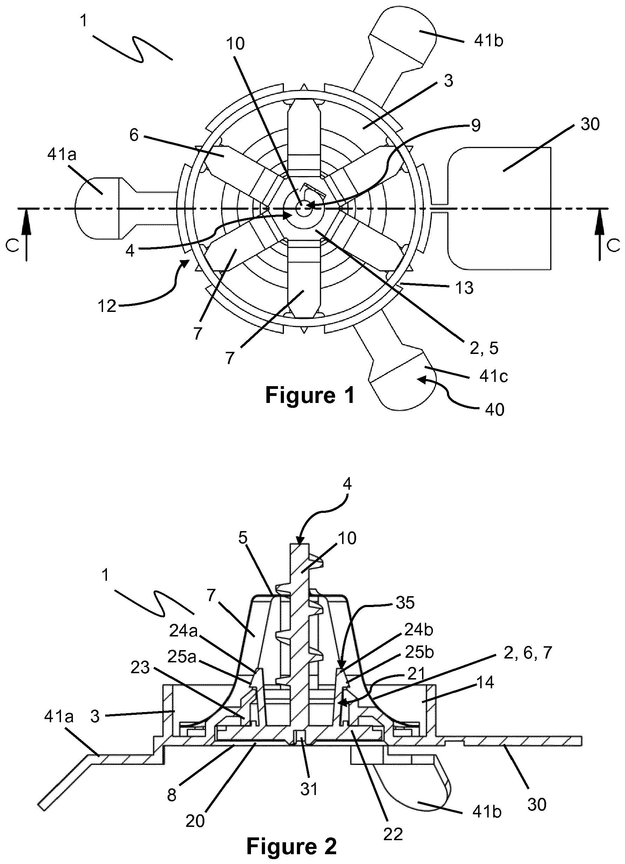

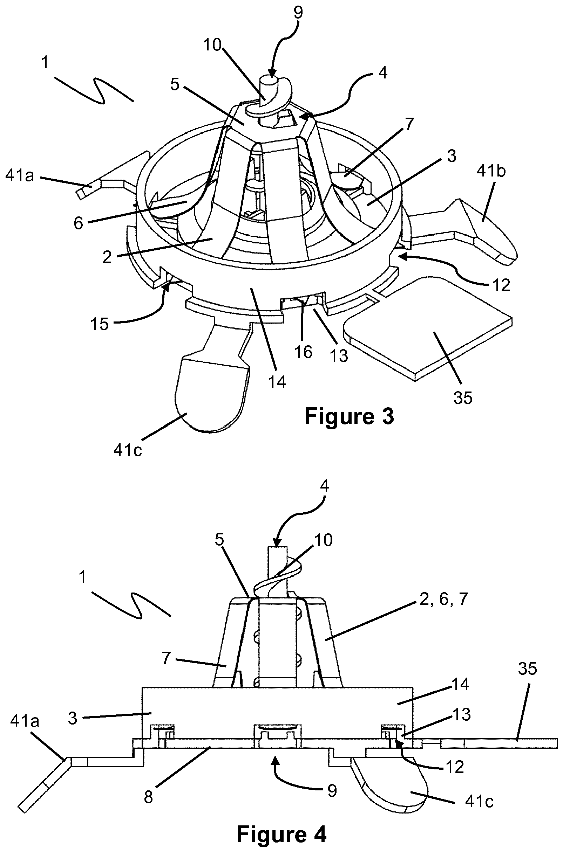

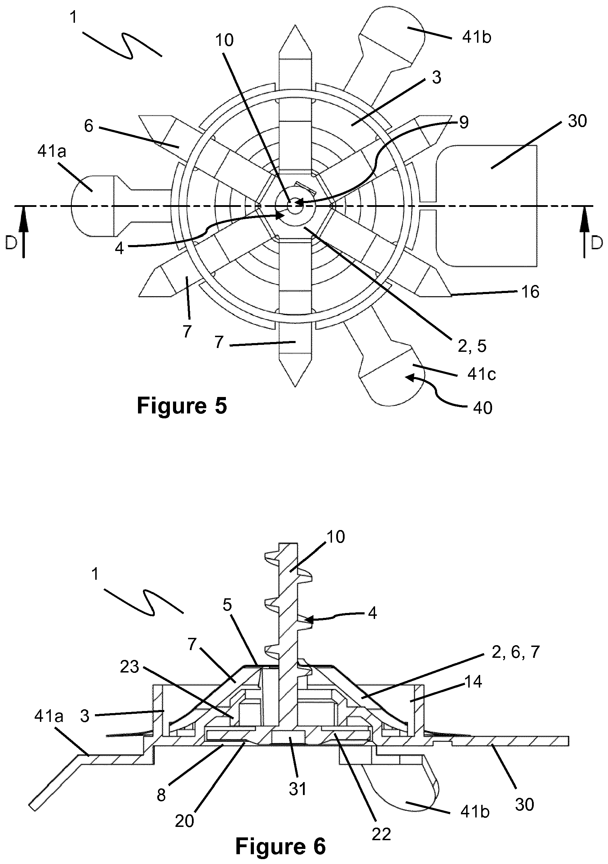

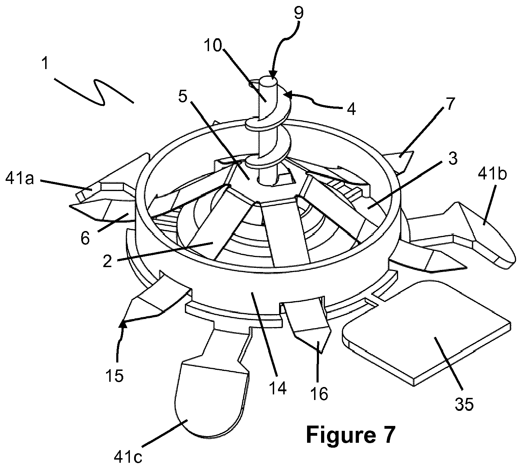

In the drawings there is shown a device indicated generally by reference numeral 1 to be fixed in an opening of a surface, the device 1 has an adjustable boundary-engaging member 2 which can be operated to extend radially outwards. The device 1 further has a support member 3 which is axially coupled to the adjustable boundary-engaging member 2, the support member 3 and the adjustable boundary-engaging member 2 being concentric. The device 1 has a withdrawn configuration, where the adjustable boundary-engaging member 2 is withdrawn, as shown in Figures 1 to 4, and an extended configuration, where the adjustable boundary-engaging member 2 is extended as shown in Figures 5 to 7. The device 1 further has an arrangement 4 for changing the configuration between the withdrawn and the extended configurations. The adjustable boundary-engaging member 2 has an apex 5 and sloping sides 6 that slope away from the apex 5. The sloping sides 6 have six sloping-side members 7 which have a non-linear/curved slope. Each sloping-side member 7 extends from the apex 5 of the adjustable boundary-engaging member 2.

The support member 3 has a substantially planar surface 8. The arrangement 4 for changing the configuration between the withdrawn and the extended configurations has an arrangement 9 for moving the apex of the adjustable boundary-engaging member 2 towards the substantially planar surface 8 of the support member 3. When the arrangement 9 for moving the apex of the adjustable boundary-engaging member 2 towards or away from the support member 3 is operated, the apex 5 of the adjustable boundary-engaging member 2 is moved towards the support member 3. When the adjustable boundary-engaging member 2 is moved substantially towards the support member 3 the sloping sides 6 of the adjustable boundary-engaging member 2 press against the support member 3 and are forced outwards. The adjustable boundary-engaging member 3 is constructed from spring steel.

The arrangement 9 for moving the apex of the adjustable boundary-engaging member 2 towards or away from the support member 3 has a screw member 10 extending between the adjustable boundary-engaging member 2 and the support member 3. When the arrangement 9 for moving the apex of the adjustable boundary-engaging member 2 towards or away from the support member 3 is operated the apex 5 of the adjustable boundary-engaging member 2 moves along the screw member 10 towards the support member 3. The screw member 10 is positioned centrally to the adjustable boundary-engaging member 2 and extends through the apex 5 of the adjustable boundary-engaging member 2 and the support member 3. The screw member 10 is a plastic auger. The arrangement 9 for moving the apex of the adjustable boundary-engaging member 2 towards or away from the support member 3 can be operated from the substantially planar surface 8 of the support member 3.

The support member 3 has an opening 20 for receiving the arrangement 9 for moving the apex of the adjustable boundary-engaging member 2 towards or away from the support member 3. The device 1 further has a retaining arrangement 21 for retaining the arrangement 9 for moving the apex of the adjustable boundary-engaging member 2 towards or away from the support member 3 relative to the support member 3. More specifically, the retaining arrangement 21 retains the arrangement 9 for moving the apex of the adjustable boundary-engaging member 2 towards or away from the support member 3 within the opening 20 of the support member 3. Part of the retaining arrangement 21 is on the screw member 10. The screw member 10 has a head portion 22 which is aligned with the substantially planar surface 8 of the support member 3. The support member 3 has a seat 23 to accommodate the head portion 22. The retaining arrangement 21 involves two retaining projections 24a, 24b positioned on the screw member 10, that extend outwards from the plane of the head portion 22. On each retaining projection 24a, 24b there is provided a clip 25a, 25b. The retaining projections 24a, 24b are resilient such that they can be slid over a portion 26a, 26b of the support member 3 to retain the arrangement 9 for moving the apex of the adjustable boundary-engaging member 2 towards or away from the support member 3. The support member 3 is formed to engage with the clips 25a, 25b.

The support member 3 and the arrangement 9 for moving the apex of the adjustable boundary-engaging member 2 being formed as two separate pieces and coupled by positioning the arrangement 9 for moving the apex of the adjustable boundary-engaging member 2 to engage with the support member 3. The retaining arrangement 21 retains the head portion 22 flush against the support member 3.

The screw member 10 is operable from the support member 3, and a key 30 is provided that can be used to rotate the screw member 10. Alternatively, a screw driver could be used. The key 30 is detachably coupled to the support member 3 and is formed with the support member 3. The key 30 is connected to the support member 3 via an easily breakable bridge. The easily breakable bridge is thinner and narrower than the main portion of the key. Advantageously, the installer does not need to use any additional tools to fit the device 1 in an opening. The arrangement 9 for moving the apex of the adjustable boundary-engaging member 2 towards or away from the support member 3 is shaped to receive the key 30. The head portion 22 of the screw member 10 has a groove 31 to receive the key 30, the key 30 being shaped to fit the groove 31.

The device 1 has a guide arrangement 12 for guiding the sloping-side members 7 of the adjustable boundary-engaging member 2. The guide arrangement 12 has six channels 13 each shaped to accommodate the sloping-side members 7. The guide arrangement 12 is located on periphery of the support member 3. The device 1 further has a side wall 14 located on the support member 3. The side wall 14 extends over the channels 13 and forms part of the guide arrangement 12. The side wall 14 prevents the sloping-side members 7 of the adjustable boundary-engaging member 2 from being deflected substantially upwards and away from the support member 3 when the arrangement 4 for extending the adjustable boundary-engaging member 2 is operated.

The device 1 has a stop arrangement 35 to limit the movement of the adjustable boundary-engaging member 2 towards the support member 3. Advantageously, this prevents the adjustable boundary-engaging member 2 from extending beyond that which is required to fix the device 1 in an opening, thereby preventing unnecessary damage to the boundary of the opening and/or surface. The stop arrangement 35 is positioned at the top of the retaining projections 24a, 24b and abuts the adjustable boundary-engaging member 2 when the apex 5 of the adjustable boundary-engaging member 2 is moved a set distance towards the support member 3.

The device 1 is fixed in an opening by operating the arrangement 4 for changing the configuration between the withdrawn and the extended configurations, the sloping sides 6 being pressed down against the support member 3 and forced outwards and being guided by the guide arrangement 12 to engage with the boundary of the opening (not shown). The device 1 has an arrangement 15 for engaging the boundary located on the adjustable boundary-engaging member 2. The arrangement 15 for engaging the boundary involves the sloping-side members 7 terminating with a pointed edge 16. The edges 16 are reinforced by having a bend in the middle (not shown). The device further has a depth-limiting arrangement 40 provided by three detachable tabs 41 a, 41b, 41c which project from the substantially planar surface 8 of the support member 3. When the device 1 is fixed in an opening the substantially planar surface 8 of the support member 3 sits flush or almost flush with the surface. The detachable tabs 41 a, 41b, 41c are positioned at a distance below the substantially planar surface when the device is positioned in an opening. The support member 3 has a keyed surface (not shown) to act as a substrate for plaster or other coating and the support member 3 is constructed from molded plastic.

In use, the key 30 is detached from the support member 3. The device 1 is held into an opening, with the detachable tabs 41a, 41b, 41c abutting the edge of the opening, and the arrangement 4 for changing the configuration between the withdrawn and the extended configurations is operated using the key 30 or screwdriver or other means. The apex 5 is brought towards the substantially planar surface 8 of the support member 3. The sloping-side members 7 are forced outwards and guided by the guide arrangement 12. The pointed edges 16 of the sloping-side members 7 engage with the boundary of the opening (not shown) and fix the device 1 in the opening. After the device 1 is fixed the detachable tabs 41a, 41b, 41c are removed. Then, it is possible to apply plaster or other coatings to device 1 and in particular to the substantially planar surface 8 if desired.

In relation to the detailed description of the different embodiments of the invention, it will be understood that one or more technical features of one embodiment can be used in combination with one or more technical features of any other embodiment where the transferred use of the one or more technical features would be immediately apparent to a person of ordinary skill in the art to carry out a similar function in a similar way on the other embodiment.

In the preceding discussion of the invention, unless stated to the contrary, the disclosure of alternative values for the upper or lower limit of the permitted range of a parameter, coupled with an indication that one of the values is more highly preferred than the other, is to be construed as an implied statement that each intermediate value of the parameter, lying between the more preferred and the less preferred of the alternatives, is itself preferred to the less preferred value and also to each value lying between the less preferred value and the intermediate value.

The features disclosed in the foregoing description or the following drawings, expressed in their specific forms or in terms of a means for performing a disclosed function, or a method or a process of attaining the disclosed result, as appropriate, may separately, or in any combination of such features be utilised for realising the invention in diverse forms thereof.

## Claims

1. A device fixable in a surface, the surface having an opening defining a boundary, the device comprising an adjustable boundary-engaging member, the device being operable to extend in at least one direction for engaging the boundary of the opening and for fixing the device in the opening.

2. A device as claimed in claim 1 wherein the adjustable boundary-engaging member comprises a means for engaging the boundary.

3. A device as claimed in claims 1 or 2 comprising a guide means for guiding the adjustable boundary-engaging member.

4. A device as claimed in any preceding claim wherein the device has a withdrawn configuration or an extended configuration and is capable of being adjusted from the withdrawn configuration to the extended configuration.

5. A device as claimed in claim 4 comprising a means for changing the configuration of the device from the withdrawn configuration to the extended configuration.

6. A device as claimed in claims 4 or 5 comprising an inner region and an outer region and wherein, when moving from the withdrawn configuration to the extended configuration, part of the adjustable boundary-engaging member moves from the inner region to the outer region.

7. A device as claimed in any preceding claim wherein the adjustable boundary-engaging member comprises an apex and sloping sides that slope away from the apex.

8. A device as claimed in claim 7 when dependent on claims 5 or 6 comprising a support member, and wherein the means for changing the configuration of the adjustable boundary-engaging member comprises means for moving the apex of the adjustable boundary-engaging member towards or away from the support member.

9. A device as claimed in claim 8 comprising a stop means to limit movement of the adjustable boundary-engaging member towards the support member.

10. A device as claimed in claims 8 or 9 wherein the means for moving the apex of the adjustable boundary-engaging member towards the support member is operable from or about the support member.

11. A device as claimed in any one of claims 8 to 10 wherein the means for moving the apex of the adjustable boundary-engaging member towards or away form the support member comprises an actuator means.

12. A device as claimed in claim 11 comprising an activator for activating the actuator means.

13. A device as claimed in any one of claims 8 to 12 comprising a retaining means for retaining the means for changing the configuration of the adjustable boundary-engaging member relative to the support member.

14. A device as claimed in any preceding claim comprising a means to limit the depth of insertion of the device into an opening.

15. A device as claimed in any preceding claim comprising insulating, fireproof and/or intumescent material.
